# EUROPEAN PATENT APPLICATION

(11) **EP 0 661 859 A2**
(43) Date of publication of application: **05.07.1995**
(21) Application number: 94850173.9
(22) Date of filing: 05.10.1994
(51) Int. Cl.: H04M 3/24, H04Q 11/04, H04M 3/36

(54) **Testing of a digital communication system**

(30) Priority: 19.10.1993 SE 9303440
(71) Applicant: TELIA AB, S-126 86 Farsta (SE)
(72) Inventor: Svensson, Lars, SE-141 49 Huddinge (SE); Holmström, Anders, SE-130 35 Ingarö (SE); Lätt, Bengt-Olov, SE-142 31 Skogäs (SE); Jonäll, Per, SE-852 34 Sundsvall (SE); Hassel, Rolf, SE-173 45 Norsborg (SE); Akerlind, Gertrud, SE-124 70 Bandhagen (SE)
(74) Representative: Karlsson, Berne

(57) **Abstract**

The present invention relates to test equipment in a digital communication network. The communication network includes test equipment which is connected to the communication network at the subscriber station. A centrally arranged computer (5) receives information from the test equipment units (1,2,3,4) and establishes statistics (6). The test equipment units, which call one another randomly (via f,g,h,i,k,m), collect information relating to the communication and the functionality of bearer services. The information allows both the calling party and the called party to collect information from the network and transfer (via B,C,D,E) this information to the computer unit.

## Description

### TECHNICAL FIELD

The present invention relates to test functions in a digital communication network. The test functions are carried out by test equipment arranged in the network equipment which is controlled by centrally arranged control functions. The testing provides an assessment of the quality and functionality of the network.

### PRIOR ART

Traffic route testers have been used for a long time for monitoring telecommunication networks. The principle is that the traffic route tester generates random traffic in the system which corresponds to subscriber traffic. The traffic route testers make test calls to one another and are placed at each station in the network. This makes it possible to check the quality of the network.

The traffic route testers are connected to the telecommunication network like normal subscribers and call other test equipment. The responding test equipment answers a call when a ringing signal is obtained. When the connection has been established, the transmission quality is checked.

The test traffic from the traffic route testers is synchronized with a call pattern which is constructed of time slots for all traffic route testers. Collisions as a consequence of two traffic route testers calling the same third traffic route tester at the same time are not possible.

The system is checked by a centrally arranged computer. The computer also constitutes out the adaptation of the system operator to the system. The computer generates new call patterns randomly for each test period. Furthermore, the computer collects information about the result of the tests and compiles statistics about these.

The traffic route testers which are known check fundamental functions in the network. The tests also concern functions between stations and station environment. All information relating to the test result is collected by the test equipment which has initiated the call. The traffic route testers which are known do not test end-to-end in the network.

### DESCRIPTION OF THE INVENTION TECHNICAL PROBLEM

In testing digital networks, the requirement exists to collect test results from both the initiating test equipment and from the called equipment. In this context, there is a special interest in the test results if an interruption of the connection occurs. A respective test equipment should be able to send this information to the central computer unit, independently of one another.

There is also a requirement for testing bearer functions, that is to say speech, data, audio and packet-switched services in the network. The tests should also be able to determine the quality of the connections in other relevant respects.

Testing of functions occurring in the network should also be tested from subscriber to subscriber.

The present invention solves the above problems.

### SOLUTION

The present invention relates to traffic route testers in a digital communication network. The communication network includes traffic route testers which are connected to the communication network at the subscriber station. A centrally arranged computer receives information from the traffic route testers and sets up statistics. The traffic route testers, which randomly call one another, collect information relating to the communication and and the functionality of bearer services. The invention allows both the calling party and the called party to collect information from the network and transfer this to the computer unit.

The present invention relates to an arrangement in a digital telecommunication network. For example, the digital telecommunication network can consist of an ISDN network. A number of subscribers are connected to the network. These subscribers call one another over the network in order to establish a communicative connection between themselves. In the network, coupling functions are arranged to receive information from a calling party. The information is utilized by the network for calling the sought-after subscriber and establishing communication routes between them.

The network also includes traffic route testers arranged at subscriber stations in the network. The traffic route testers include functions for establishing a call over the network and for answering a call. Respective traffic route testers transfer information between themselves after contact is established. This information, like information obtained from the network during the setting-up phase, is transferred to a centrally arranged computer in the network. The computer processes the information obtained and compiles statistical information for utilization in the determination of the quality of the network.

The computer unit also directs the traffic route testers with respect to which call is to be carried out and when, during which time period, this is to occur. The central computer consists of a computer common to the entire system or of a number of computers which supervise particular parts of the network. Furthermore, each traffic route tester collects, independently of who is calling, information relating to the test result. When the connection between the traffic route testers is established, a predetermined bit pattern is transmitted. The receiving party analyzes the bit pattern and, guided by the difference between the received and transmitted bit patterns, determines the quality of the connection.

### ADVANTAGES

The present invention makes it possible for information relating to the communication to be obtained from all parties in the communication. The information obtained relates to signals in the network and the communication between subscriber equipment. Both the call-establishing traffic route tester and the responding traffic route tester register the current information which is obtained from the network. This provides not only information from the calling party but also from the called party. This information is essential for assessing the functionality of the network since a complete picture of the cause of malfunctions in, for example, an interruption of a connection, can be analyzed.

Furthermore, the invention allows different bearer services, for example speech, data, audio and so forth, to be checked. The invention also allows the functions to be tested from end to end.

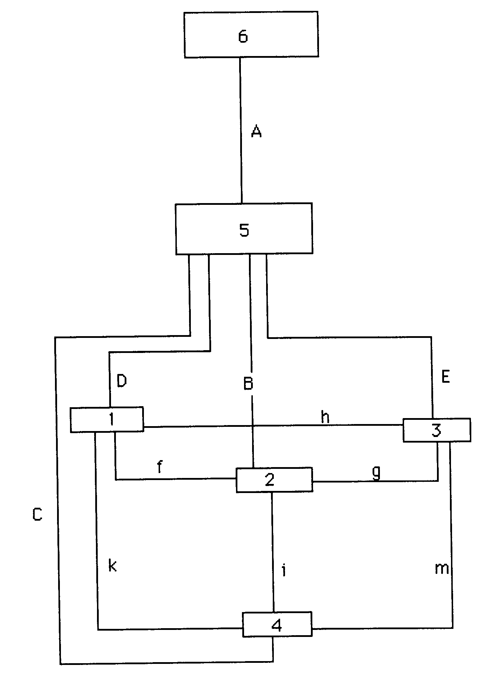

### DESCRIPTION OF THE FIGURE

The figure shows a system according to the invention in block diagram form.

### PREFERRED EMBODIMENT

In the text which follows, the concept of the invention is described with reference to the figures and designations therein. A number of subscriber stations 1, 2, 3, 4 are arranged in a digital communication network. Each one of these subscriber stations is provided with a traffic route tester. The traffic route testers communicate with a computer 5 arranged centrally in the network.The communication between the computer and the traffic route testers is carried out via traffic routes B, C, D and E. The central computer communicates via connection A with a system for processing statistics, 6. The system for processing statistics can be freestanding per se, as is shown in the figure, or can be incorporated in the computer centrally arranged in the network. The system for processing statistics, 5, can also be arranged to receive information from a number of centrally arranged computers which serve different networks or different parts of a network.

The centrally arranged computer, 5, supervises and controls the traffic route testers which have been arranged at subscriber stations 1, 2, 3 and 4. In this context, the computer communicates with traffic route testers 1, 2, 3 and 4 via connections B, C, D and E. Testing is initated in the network by the computer transferring information to each traffic route tester concerning which traffic route tester/testers each one is to establish contact with. The computer also specifies when the contact is to be established. The point in time for establishing the contact is here specified, for example, as a time interval within which the contact is to be established.

Each one of the traffic route testers 1, 2, 3 and 4 stores information from the computer in an internal memory. It is assumed that traffic route tester 1 has received an order to establish contact with traffic route tester 2. When contact is established between traffic route testers 1 and 2, traffic route tester 1 calls the digital network in the normal manner. Thus, a call number is specified for traffic route tester 2. The information is registered by the digital network, which effects a connection between traffic route testers 1 and 2 which, in the figure, is specified by connection f. In the figure, coupling equipment and other functions which are present in the network for establishing contact between different subscriber equipment items are not shown. These functions are of a known type, which is why it is not necessary to show these parts of the network. Each one of the connections f, g, h, i, k and l thus represents a communication route between traffic route testers which routes, on different occasions, consist per se of different traffic routes in the network. Traffic route tester 1, which has initiated the call, registers all phases in the course of setting-up. When contact with traffic route tester 2 is established, both traffic route tester 1 and 2 register the result of the course of the setting up. When contact has been established between the traffic route testers, a test pattern, which is predetermined, is transmitted between the traffic route testers. The test pattern is received by traffic route tester 2 which also notes whether the pattern has been received correctly or erroneously. When erroneous receptions are detected, this is noted and it is stated, that the connection is not satisfactory. The received error in the test pattern thereby constitutes a grading of the quality of the connection. It is thereby established if the connection is acceptable for different bearer services or not. This means that certain errors are accepted, for example, in the transmission of speech without the information being spoilt for the receiver. In data transmission, for example, the same percentage error in the transmission is perhaps not acceptable. For this reason, the connection is classified as not acceptable or less acceptable for, for example, data transmission. The capability of the connection to transmit other bearer services, for example audio and packet-switched services, in the network is classified in a corresponding manner. The information obtained relating to the test is transferred by traffic route tester 1 or, respectively, 2 to the central computer 5 after communication is concluded.

In corresponding manner, the remaining traffic route testers establish contact with remaining test equipment in accordance with directives from the central computer 5.

If traffic route tester 1 is later ordered to contact traffic route tester 3, this take place in the same manner as specified above. If contact fails to be established, both traffic route tester 1 and 3 register the course of the incident. When both have established that the contact has failed, each respective traffic route tester transfers the information to the central computer 5. In those cases, where the called traffic route tester is not aware that contact has been sought, an order is received from the central computer to transfer information relating to signals received from the network during the period of time in question.

The central computer compiles the information received and transfers it to the statistics-processing unit 6. The statistics-processing unit thereafter compiles the statistics relating to the network condition.

The computer unit decides, on the basis of the statistics and test results received, whether certain connections should be tested more intensively than others or, respectively, whether a warning should be sent to the network operator that certain connections should be checked or repaired.

The invention is not limited to the embodiment shown above but can be subjected to modifications within the scope of the subsequent Patent Claims and concept of the invention.

## Claims

1. Arrangement in a digital telecommunication network preferably an ISDN network, comprising coupling elements for coupling together subscriber equipment in the network, and traffic route testers arranged at the subscriber station in the network, characterized in that a first traffic route tester requests connection to its associated coupling elements in the network, in that the coupling elements receive information from the first traffic route tester and effect through-connection to a second traffic route tester in the network, in that the first and the second traffic route testers transfer test information between themselves, in that the first and the second traffic route testers register signal information items in the network and the result of test information transmission between the first and the second traffic route testers and in that an assessment of the characteristics of the connection and the signals is obtained and in that the first and, respectively, the second traffic route testers transfer the recorded information to a centrally arranged information receiver.

2. Arrangement according to Claim 1, characterized in that bearer services, for example speech, audio, data and so forth, are tested.

3. Arrangement according to Claim 1, characterized in that the central information receiver consists of a computer unit.

4. Arrangement according to Claims 1 and 3, characterized in that the computer unit initates the test units by specifying time periods and time intervals and which connections, that it to say to which subscribers, the test is to be carried out.

5. Arrangement according to Claims 1, 3 and 4, characterized in that the computer unit stores information relating to the result of the testing and establishes and presents statistics on characteristics of different connections in the network.

6. Arrangement according to Claims 1 and 3, characterized in that the traffic route testers individually collect information on the test result and transfer this information to the computer unit independently of one another.

7. Arrangement according to Claims 1 and 2, characterized in that the test information consists of a predetermined bit pattern.

8. Arrangement according to Claims 1, 2 and 7, characterized in that the difference between the received bit pattern and the transmitted bit pattern constitutes a measure of the characteristics of the connection.
